# EUROPÄISCHE PATENTSCHRIFT

(11) **EP 2 066 436 B1**
(45) Veröffentlichungstag und Bekanntmachung des Hinweises auf die Patenterteilung: **18.07.2012**
(21) Anmeldenummer: 07803495.6
(22) Anmeldetag: 14.09.2007
(51) Int. Cl.: B01J 8/18, B01J 19/32

(54) **WIRBELSCHICHTREAKTOR ZUR DURCHFÜHRUNG EINER GASPHASENREAKTION**
FLUIDIZED BED REACTOR FOR CARRYING OUT A GAS PHASE REACTION
REACTEUR À LIT FLUIDISÉ POUR EFFECTUER UNE RÉACTION EN PHASE GAZEUSE

(30) Priorität: 19.09.2006 EP 06120884
(43) Veröffentlichungstag der Anmeldung: 10.06.2009
(73) Patentinhaber: BASF SE, 67056 Ludwigshafen (DE)
(72) Erfinder: SEIDEMANN, Lothar, 68169 Mannheim (DE); STÜTZER, Dieter, 67373 Dudenhofen (DE); GRASSLER, Thomas, 67117 Limburgerhof (DE); KARCHES, Martin, 67434 Neustadt (DE); SCHNEIDER, Christian, 68165 Mannheim (DE)
(86) Internationale Anmeldenummer: PCT/EP2007/059702
(87) Internationale Veröffentlichungsnummer: WO 2008/034769

(56) Entgegenhaltungen:
- EP-A- 0 428 265
- EP-A- 1 477 224
- DE-A1- 10 226 120
- US-A- 6 146 519
- US-A1- 2002 112 988

## Beschreibung

Die Erfindung betrifft einen Wirbelschichtreaktor zur Durchführung einer Gasphasenreaktion, wobei ein gasförmiges Reaktionsgemisch einen heterogenen partikelförmigen, eine Wirbelschicht ausbildenden Katalysator von unten nach oben durchströmt und wobei Einbauten in der Wirbelschicht angeordnet sind.

Wirbelschichtreaktoren werden in bekannter Weise zur Durchführung von Gasphasenreaktionen eingesetzt, bei denen ein oder mehrere gasförmige Edukte mit oder ohne Zusatz von inertem Trägergas von unten nach oben durch eine Schüttung aus einem heterogenen partikelförmigen Katalysator geleitet werden, der sehr feinteilig ist und durch das Gas in der Schwebe, als Wirbelbett, gehalten wird. Häufig werden Feststoffpartikel mit einem mittleren Durchmesser der Partikel im Bereich von 1 bis 1000 µm, insbesondere 1 bis 500 µm oder auch 1 bis 200 µm eingesetzt.

Charakteristisch für die Wirbelschicht ist, dass das Gas Blasen ausbildet, bedingt durch den begrenzten Abstand der Feststoffpartikel zueinander. Wirbelschichtreaktoren eignen sich in bekannter Weise insbesondere zur Durchführung von exothermen oder endothermen Reaktionen mit großer Wärmetönung, da aufgrund der ausgezeichneten Feststoffdurchmischung über die fluidisierten Katalysatorpartikel sehr gute Wärmeübergangseigenschaften gegeben sind.

Bei Wirbelschichtreaktoren werden die Verweilzeit der Gasphase, der Stoff- und der Wärmeübergang durch den Wirbelzustand bestimmt, der von der Strömungsgeschwindigkeit der Gasphase und den Feststoffeigenschaften des Wirbelschichtkatalysators abhängt.

Wirbelschichtreaktoren sind jedoch nachteilig bezüglich des Stoffübergangs, da durch die Bildung feststoffarmer Gasblasen der Kontakt zwischen Katalysator und Reaktionspartnem limitiert ist.

Besonders nachteilig erweisen sich Wirbelschichtreaktoren in der Durchführung von verweilzeitkritischen und nicht selektiven Reaktionen. Aufgrund der konvektiven Feststoffrückvermischung in der Wirbelschicht kann das gebildete Produkt in der Eingangszone des Wirbelschichtreaktors zu Neben- und Folgeprodukten weiter reagieren, mit entsprechend negativen Auswirkungen auf Ausbeute und Selektivität.

Es wurde daher eine Vielzahl von Einbauten in der Wirbelschicht und deren Auswirkungen auf die Eigenschaften der Wirbelschichtreaktoren untersucht. Eine Übersicht bietet beispielsweise das Handbook of Fluidization and Fluid Particle Systems, Marcel Dekker-Verlag, New York - Basel, 2003, Seiten 175-199.

Bei den Einbauten kann es sich beispielsweise um Rohre handeln, die in der Wirbelschicht eingesetzt werden, um die Größe der Gasblasen und die konvektive Feststoffrückvermischung zu reduzieren. Die Rohre können sowohl vertikal als auch horizontal ausgerichtet sein, wobei der Abstand der Rohre enger als die mittlere Gasblasengröße ausgeführt sein muss. Nachteilig hierbei ist die große Querschnittsflächenbelegung des Reaktors sowie die resultierende verstärkte Entmischung und Austragsneigung bezüglich des Wirbelschichtkatalysators.

Trennbleche können ebenfalls horizontal oder vertikal ausgerichtet sein. In der horizontalen Anordnung von Trennblechen kommt es jedoch bei höheren Gasgeschwindigkeiten, die für eine wirtschaftliche Reaktorbelastung unumgänglich sind, zur Ausbildung von Gaspolstern, die den Wärmeübergang stark verschlechtern (vgl. oben zitiertes Handbuch, Seite 190 Figuren 15a bis d in Verbindung mit der Beschreibung auf Seite 190 bis 191, linke Spalte). Insbesondere können jedoch auch durch die erhöhte Querschnittsflächenbelegung die unteren Zonen in der Wirbelschicht an Feststoffkatalysator verarmen, so dass eine deutliche Verschlechterung im Wärmeübergang berücksichtigt werden muss. Nachteilig sind auch vertikale Einbauten, beispielsweise vertikale Rohrreihen, die insbesondere nicht eine für viele Anwendungszwecke ausreichende Reduzierung der Blasengröße bewirken können.

Eine Verbesserung der Verweilzeiteigenschaften und des Stoffübergangs kann auch über regelmäßige oder unregelmäßige Schüttungen im Wirbelbett erreicht werden. In den engen Zwischenräumen zwischen den die Schüttung bildenden Formkörpern kann der Stoffübergang verbessert und die Verweilzeitverteilung optimiert werden. Allerdings erweist sich auch hier die große Querschnittsbelegung durch die Schüttung als nachteilig in Bezug auf eine verstärkte Entmischung und Austragsneigung des Katalysators.

Es war demgegenüber Aufgabe der Erfindung, einen Wirbelbettreaktor mit Einbauten weiter zu verbessern, insbesondere bezüglich der Verweilzeiteigenschaften, wobei der Feststoff deutlich länger, um ca. 2 Zehnerpotenzen oder mehr länger im Vergleich zur Gasströmung lokal verweilt und wobei die obigen Nachteile vermieden werden.

Der Wirbelbettreaktor mit Einbauten sollte insbesondere auch zur Durchführung von Verfahren in großtechnischem Maßstab einsetzbar sein.

Die Lösung besteht in einem Wirbelschichtreaktor zur Durchführung einer Gasphasenreaktion, wobei ein gasförmiges Reaktionsgemisch einen heterogenen, partikelförmigen, eine Wirbelschicht ausbildenden Katalysator von unten nach oben durchströmt und wobei Einbauten in der Wirbelschicht angeordnet sind, der dadurch gekennzeichnet ist, dass die Einbauten die Wirbelschicht in eine Mehrzahl von horizontal sowie eine Mehrzahl von vertikal im Wirbelschichtreaktor angeordneten Zellen aufteilen, mit Zellwänden, die gasdurchlässig sind und die Öffnungen aufweisen, die eine Austauschzahl des heterogenen partikelförmigen Katalysators in vertikaler Richtung im Bereich von 1 bis 100 Litern/Stunde pro Liter Reaktorvolumen gewährleisten. Vorteilhaft kann auch in horizontaler Richtung die Austauschzahl im Bereich von 0 bis 100 Litern/Stunde pro Liter Reaktorvolumen liegen.

Es wurde gefunden, dass es wesentlich ist, die Wirbelschicht mittels Einbauten sowohl in horizontaler als auch in vertikaler Richtung in Zellen aufzuteilen, das heißt in von Zellwänden umschlossene Hohlräume, wobei die Zellwände gasdurchlässig sind und Öffnungen aufweisen, die in vertikaler Richtung im Wirbelschichtreaktor einen Feststoffaustausch erlauben. Darüber hinaus können in den Zellwänden Öffnungen vorgesehen sein, die einen Feststoffaustausch in horizontaler Richtung erlauben. Der heterogene partikelförmige Katalysator kann sich somit zwar in vertikaler Richtung und gegebenenfalls auch in horizontaler Richtung durch den Wirbelschichtreaktor bewegen, er wird aber in den einzelnen Zellen im Vergleich zu einer Wirbelschicht ohne dieselben zurückgehalten, wobei die oben definierten Austauschzahlen gewährleistet werden.

Die Austauschzahl wird durch den Einsatz von radioaktiv markierten Feststoff-Tracer-Partikeln bestimmt, die in das wirbelnde Reaktionssystem eingegeben werden, wie beispielsweise in: G. Reed "Radioisotope techniques for problem-solving in industrial process plants", Chapter 9 ("Measurement of residence times and residence-time distribution"), p. 112-137, (J.S. Charlton, ed.), Leonard Hill, Glasgow and London 1986, (ISBN 0-249-44171-3), beschrieben. Über die Aufnahme von Zeit und Ort dieser radioaktiv markierten Partikel kann die Feststoffbewegung lokal bestimmt und die Austauschzahl abgeleitet werden (G. Reed in: "Radioisotope techniques for problem-solving in industrial process plants", Chapter 11 ("Miscellanous radiotracer applications", 11.1. "Mixing and blending studies"), p. 167-176, (J. S. Charlton, ed.), Leonard Hill, Glasgow and London 1986, (ISBN 0-249-44171-3).

Durch die gezielte Auswahl der Geometrie der Zellen kann die Verweilzeit des heterogenen partikelförmigen Katalysators in denselben an die Charakteristik der jeweils durchzuführenden Reaktion angepasst werden.

Durch die Reihenschaltung einer Mehrzahl, das heißt insbesondere von 0 bis 100 Zellen oder auch von 10 bis 50 Zellen pro Meter Betthöhe, das heißt in vertikaler Richtung, in Richtung der Gasströmung von unten nach oben durch den Reaktor, wird die Rückvermischung begrenzt und damit die Selektivität und der Umsatz verbessert. Durch die zusätzliche Anordnung einer Mehrzahl von, das heißt von 10 bis 100 Zellen oder auch von 10 bis 50 Zellen pro Meter in horizontaler Richtung im Wirbelschichtreaktor, das heißt von Zellen, die parallel oder in Serie vom Reaktionsgemisch durchströmt werden, kann die Kapazität des Reaktors nach Bedarf angepasst werden. Die Kapazität des erfindungsgemäßen Reaktors ist somit grundsätzlich nicht beschränkt und kann dem konkreten Bedarf angepasst werden, beispielsweise auch für Reaktionen im großtechnischen Maßstab.

Indem die Zellen Hohlräume umschließen, die den partikelförmigen heterogenen Katalysator aufnehmen, nimmt das Zellmaterial selbst nur einen begrenzten Teil des Querschnitts des Wirbelbettreaktors ein, insbesondere von nur etwa 1 bis 10 % der Querschnittsfläche des Wirbelschichtreaktors und führt daher nicht zu den bei den Einbauten aus dem Stand der Technik bekannten, mit einer erhöhten Querschnittsbelegung verbundenen Nachteilen.

Der erfindungsgemäße Wirbelschichtreaktor wird, wie üblich, von unten über einen Gasverteiler mit den gasförmigen Einsatzstoffen beaufschlagt. Beim Passieren der Reaktionszone werden die gasförmigen Einsatzstoffe an dem heterogenen partikelförmigen Katalysator, der durch die Gasströmung zum Wirbeln angeregt wird, partiell umgesetzt. Die partiell umgesetzten Einsatzstoffe strömen in die nächste Zelle, wo dieselben weiter partiell umgesetzt werden.

Oberhalb der Reaktionszone ist eine Feststoffabscheidevorrichtung vorgesehen, die mitgeführten Katalysator von der Gasphase trennt. Das umgesetzte Produkt verlässt den erfindungsgemäßen Wirbelschichtreaktor am oberen Ende desselben feststofffrei.

Darüber hinaus kann der erfindungsgemäße Wirbelschichtreaktor sowohl von unten als auch von der Seite zusätzlich mit flüssigen Edukten beaufschlagt werden. Diese müssen jedoch direkt an ihrer Zugabestelle verdampfen können, um die Wirbelfähigkeit des Katalysators zu gewährleisten.

Die Zellen sind in ihrer Geometrie nicht eingeschränkt; es kann sich beispielsweise um Zellen mit runden Wänden, insbesondere Hohlkugeln, oder auch um Zellen mit eckigen Wänden handeln. Bei einer eckigen Ausbildung der Wände ist bevorzugt, dass die Zellen nicht mehr als 50 Ecken aufweisen, vorzugsweise nicht mehr als 30 und insbesondere nicht mehr als 10 Ecken.

Die Zellwände in den Zellen der Einbauten sind gasdurchlässig ausgebildet, um durch ein Durchströmen der Gasphase durch die Zellen das Wirbeln des heterogenen partikelförmigen Katalysators zu gewährleisten. Hierzu können die Zellwände aus einem Siebgewebe gebildet sein oder auch aus flächenförmigen Materialien, die beispielsweise runde oder auch anders geformte Löcher aufweisen.

Hierbei beträgt die mittlere Maschenweite der eingesetzten Siebgewebe oder die bevorzugte Weite der Löcher in den Zellwänden insbesondere zwischen 50 und 1 mm, weiter bevorzugt zwischen 10 und 1 mm und besonders bevorzugt zwischen 5 und 1 mm.

Besonders bevorzugt werden als Einbauten in die Wirbelschicht Kreuzkanalpackungen eingesetzt, das heißt Packungen mit in vertikaler Richtung im Wirbelbettreaktor parallel zueinander angeordneten geknickten gasdurchlässigen Metallblechen, Streckmetall- oder Gewebelagen, mit Knickkanten, die Knickflächen mit einem von Null verschiedenen Neigungswinkel zur Vertikalen ausbilden, und wobei die Knickflächen aufeinander folgender Metallbleche, Streckmetall- oder Gewebelagen den gleichen Neigungswinkel, jedoch mit umgekehrtem Vorzeichen aufweisen und dadurch Zellen ausbilden, die in vertikaler Richtung durch Engstellen zwischen den Knickkanten begrenzt werden.

Beispiele für Kreuzkanalpackungen sind die Packungen der Typen Mellapack^{®}, CY oder BX der Fa. Sulzer AG, CH-8404 Winterthur oder die Typen A3, BSH, B1 oder M der Fa. Montz GmbH, D-40723 Hilden.

In den Kreuzkanalpackungen bilden sich in vertikaler Richtung zwischen zwei jeweils aufeinander folgenden Metallblechen, Streckmetall- oder Gewebelagen, durch die geknickte Strukturierung derselben, Hohlräume, das heißt Zellen aus, die durch Engstellen zwischen den Knickkanten begrenzt werden.

Der mittlere hydraulische Durchmesser der Zellen, bestimmt mittels radioaktiver Tracertechnik, und die beispielsweise vorstehend in Verbindung mit der Bestimmung der Austauschzahl angegebenen Literaturstelle beschrieben ist, liegt bevorzugt im Bereich zwischen schen 500 und 1 mm, weiter bevorzugt zwischen 100 und 5 mm und besonders bevorzugt zwischen 50 und 5 mm.

Hierbei wird als hydraulischer Durchmesser in bekannter Weise die vierfache horizontale Querschnittsfläche der Zelle, dividiert durch den von oben betrachteten Umfang der Zelle, definiert.

Die mittlere Höhe der Zellen, gemessen in vertikaler Richtung im Wirbelbettreaktor mittels radioaktiver Tracertechnik, beträgt vorzugsweise zwischen 100 und 1 mm, weiter bevorzugt zwischen 100 und 3 mm und besonders bevorzugt zwischen 40 und 5 mm.

Die obigen Kreuzkanalpackungen belegen nur einen geringen Teil der Querschnittsfläche des Wirbelschichtreaktors, insbesondere einen Anteil von etwa 1 bis 10 % derselben.

Bevorzugt liegen die Neigungswinkel der Knickflächen zur Vertikalen im Bereich von 10 bis 80°, insbesondere zwischen 20 und 70°, besonders bevorzugt zwischen 30 und 60°.

Die Knickflächen in den Metallblechen, Streckmetall- oder Gewebelagen weisen bevorzugt eine Knickhöhe im Bereich zwischen 100 und 3 mm, besonders bevorzugt zwischen 40 und 5 mm, und einen Abstand der Engstellen zwischen den Knickkanten im Bereich zwischen 50 und 2 mm, besonders bevorzugt zwischen 20 und 3 mm, auf.

In die Zellen bildenden Einbauten können für eine gezielte Steuerung der Reaktionstemperatur Wärmeübertrager zwecks Zuführung von Wärme bei endothermen Reaktionen oder Abfuhr von Wärme bei exothermen Reaktionen eingebaut werden. Die Wärmeübertrager können beispielsweise plattenförmig oder rohrförmig ausgebildet sein und im Wirbelschichtreaktor vertikal, horizontal oder geneigt angeordnet sein.

Die Wärmeübertragungsflächen können auf die konkrete Reaktion abgestimmt werden; dadurch kann jede Reaktion wärmetechnisch mit dem erfindungsgemäßen Reaktorkonzept realisiert werden.

Die Zellen bildenden Einbauten werden bevorzugt aus Werkstoffen mit sehr guter Wärmeleitfähigkeit hergestellt, so dass der Wärmetransport über die Zellwände nicht behindert wird. Somit entsprechen die Wärmeübergangseigenschaften des erfindungsgemäßen Reaktors denjenigen eines herkömmlichen Wirbelschichtreaktors.

Die Werkstoffe für die Zellen bildenden Einbauten sollen darüber hinaus eine ausreichende Stabilität unter Reaktionsbedingungen aufweisen; insbesondere ist neben der Beständigkeit gegenüber chemischen und thermischen Belastungen auch die Beständigkeit des Werkstoffs gegenüber mechanischem Angriff durch den wirbelnden Katalysator zu beachten.

Aufgrund der einfachen Bearbeitbarkeit derselben sind Metall-, Keramik-, Polymer- oder Glaswerkstoffe besonders geeignet.

Die Einbauten sind bevorzugt dergestalt ausgebildet, dass sie 10 bis 90 Vol.-% der Wirbelschicht in Zellen unterteilen.

Durch die begrenzte Querschnittsbelegung durch die Zellen bildenden Einbauten weist der erfindungsgemäße Reaktor keine Nachteile hinsichtlich Entmischung und Austragsneigung des wirbelnden partikelförmigen Katalysators auf.

Der erfindungsgemäße Wirbelschichtreaktor eignet sich insbesondere zur Durchführung der folgenden Reaktionen: Hydrierungen, insbesondere Fischer-Tropsch-Reaktionen, Herstellung von Cyclohexen/-hexan aus Benzol, ammoniakfreie Hydrierung von Nitrilen, Tetrahydrofuran, BDO aus Maleinsäureanhydrid oder Benzol aus Methan, für Dehydrierungen, beispielsweise Herstellung von Ethen aus Ethan, Propen aus Propan, Buten aus Butan, Styrol aus Ethylbenzol oder Dodecen aus Dodecan, Partialoxidationen, beispielsweise Maleinsäureanhydrid aus n-Butan oder Raffinat-II, Phthalsäureanhydrid aus Naphtalin oder ortho-Xylol, Acrolein oder Acrylsäure aus Propen oder Propan, Nicotinsäure aus beta-Picolin, Glyoxal aus Ethylenglykol, Essigsäure aus Ethanol, Formaldehyd aus Methanol, Ameisensäure aus Methanol oder Essigsäure aus Ethan, Epoxidationen, insbesondere von Ethen zu Ethylenoxid, Ammonoxidationen, insbesondere zur Herstellung von Acrylnitril aus Propen, Methacrylnitril aus Isobutan oder Phthalonitril aus Xylol, sowie weitere Reaktionen, insbesondere Herstellung von Vinylacetat aus Acetylen und Essigsäure, Chlorierung von Methan, Umsetzung von Phenol und Methanol zu Kresol und 2,6-xylenol, Methanol zu Gasolin, Methathese von 1-Buten zu 1-Dodecen oder Herstellung von Melamin aus Harnstoff.

Die Erfindung wird im Folgenden anhand einer Zeichnung näher erläutert.

Es zeigen im Einzelnen:
- Figur 1: die schematische Darstellung einer bevorzugten Ausführungsform eines erfindungsgemäßen Wirbelschichtreaktors, und
- Figur 2: die schematische Darstellung einer bevorzugten Ausführungsform von erfindungsgemäßen Einbauten.

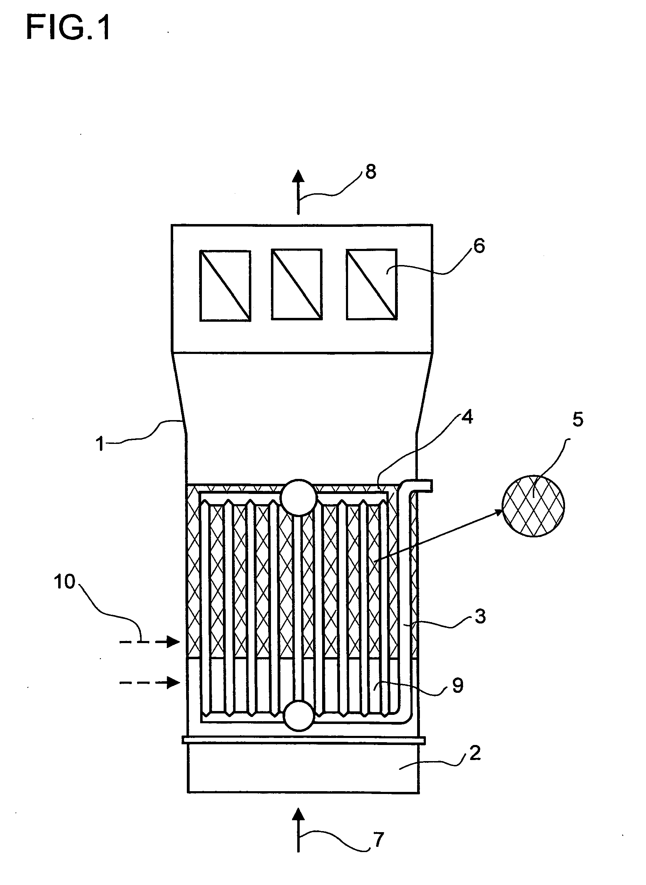

Der in Figur 1 dargestellte Wirbelschichtreaktor 1 umfasst eine feststofffreie Gasverteilerzone 2, Einbauten 3, die Zellen 4 ausbilden, mit einem Wärmeübertrager 5 im Bereich der Einbauten 3.

Oberhalb der Reaktionszone erweitert sich der Reaktor und weist mindestens einen Feststoffabscheider 6 auf. Der Pfeil 7 gibt die Zuführung der gasförmigen Einsatzstoffe und der Pfeil 8 die Abführung des gasförmigen Produktstromes an. Zusätzliche flüssigphasige Edukte können seitlich, über die gestrichelten Pfeile 9, zugegeben werden.

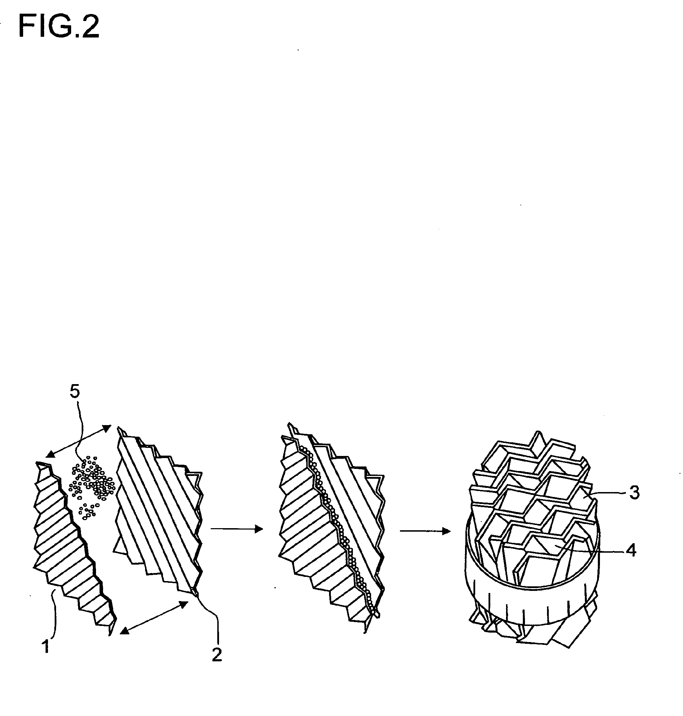

Figur 2 stellt eine bevorzugte Ausführungsform von erfindungsgemäßen Einbauten 3 in Form einer Kreuzkanalpackung dar, mit geknickten Metallblechen 10, die parallel zueinander in Längsrichtung angeordnet sind, mit Knickkanten 11, die das Metallblech 10 in Knickflächen 12 unterteilen und wobei zwei aufeinander folgende Metallbleche so angeordnet sind, dass sie den gleichen Neigungswinkel, jedoch mit umgekehrten Vorzeichen aufweisen und dabei Zellen 4 ausbilden, die in vertikaler Richtung durch Engstellen 13 begrenzt werden.

## Patentansprüche

1. Wirbelschichtreaktor (1) zur Durchführung einer Gasphasenreaktion, wobei ein gasförmiges Reaktionsgemisch einen heterogenen partikelförmigen, eine Wirbelschicht ausbildenden Katalysator von unten nach oben durchströmt und wobei Einbauten (3) in der Wirbelschicht angeordnet sind, **dadurch gekennzeichnet, dass** die Einbauten (3) die Wirbelschicht in eine Mehrzahl von horizontal sowie eine Mehrzahl von vertikal im Wirbelschichtreaktor (1) angeordneten Zellen (4) aufteilen, mit Zellwänden, die gasdurchlässig sind und die Öffnungen aufweisen, die eine Austauschzahl des heterogenen partikelförmigen Katalysators in vertikaler Richtung im Bereich von 1 bis 100 Litern/Stunde pro Liter Reaktorvolumen gewährleisten.

2. Wirbelschichtreaktor (1) nach Anspruch 1, **dadurch gekennzeichnet, dass** die Öffnungen in den Zellwänden der im Wirbelschichtreaktor angeordneten Zellen (4) eine Austauschzahl des heterogenen partikelförmigen Katalysators in horizontaler Richtung im Bereich von 100 Litern/Stunde pro Liter Reaktorvolumen gewährleisten.

3. Wirbelschichtreaktor (1) nach Anspruch 1 oder 2, **dadurch gekennzeichnet, dass** die Öffnungen in den Zellwänden der im Wirbelschichtreaktor (1) angeordneten Zellen (4) eine Austauschzahl des heterogenen partikelförmigen Katalysators in vertikaler Richtung im Bereich von 10 bis 50 Litern/Stunde pro Liter Reaktorvolumen und in horizontaler Richtung von 0 oder im Bereich von 10 bis 50 Litern/Stunde pro Liter Reaktorvolumen gewährleisten.

4. Wirbelschichtreaktor (1) nach einem der Ansprüche 1 bis 3, **dadurch gekennzeichnet, dass** die Einbauten (3) als Kreuzkanalpackung ausgebildet sind, mit in vertikaler Richtung im Wirbelschichtreaktor (1) parallel zueinander angeordneten geknickten gasdurchlässigen Metallblechen (10), Streckmetall- oder Gewebelagen, mit Knickkanten (11), die Knickflächen (12) mit einem von Null verschiedenen Neigungswinkel zur Vertikalen ausbilden, und wobei die Knickflächen (12) aufeinander folgender Metallbleche (10), Streckmetall- oder Gewebelagen den gleichen Neigungswinkel, jedoch mit umgekehrten Vorzeichen aufweisen und dadurch Zellen ausbilden, die in vertikaler Richtung durch Engstellen (13) zwischen den Knickkanten (11) begrenzt werden.

5. Wirbelschichtreaktor (1) nach Anspruch 4, **dadurch gekennzeichnet, dass** die Neigungswinkel der Knickflächen (12) zur Vertikalen im Bereich von 10 bis 80°, bevorzugt zwischen 20 und 70°, besonders bevorzugt zwischen 30 und 60°, liegen.

6. Wirbelschichtreaktor (1) nach einem der Ansprüche 1 bis 3, **dadurch gekennzeichnet, dass** die Einbauten (3) aus einer Schüttung von Hohlkugeln gebildet sind.

7. Wirbelschichtreaktor (1) nach einem der Ansprüche 1 bis 6, **dadurch gekennzeichnet, dass** die Zellen (4) der Einbauten (3) einen hydraulischen Durchmesser, gemessen mittels radioaktiver Tracertechnik, zwischen 100 und 5 mm, bevorzugt zwischen 50 und 5 mm, aufweisen.

8. Wirbelschichtreaktor (1) nach einem der Ansprüche 1 bis 5 oder 7, **dadurch gekennzeichnet, dass** die Zellen (4) der Einbauten (3) eine mittlere Höhe, gemessen in vertikaler Richtung im Wirbelschichtreaktor (1) mittels radioaktiver Tracertechnik, zwischen 100 und 3 mm, bevorzugt zwischen 40 und 5 mm, aufweisen.

9. Wirbelschichtreaktor (1) nach einem der Ansprüche 1 bis 5, 7 oder 8, **dadurch gekennzeichnet, dass** die Knickflächen (12) in den Metallblechen (10), Streckmetall- oder Gewebelagen eine Knickhöhe im Bereich zwischen 100 und 3 mm, besonders bevorzugt zwischen 40 und 5 mm, und der Abstand der Engstellen (13) zwischen den Knickkanten (11) Werte im Bereich zwischen 50 und 2 mm, besonders bevorzugt zwischen 20 und 3 mm, aufweist.

10. Wirbelschichtreaktor (1) nach einem der Ansprüche 1 bis 9, **dadurch gekennzeichnet, dass** in die Einbauten (3) Wärmeübertrager (5) eingebracht sind.

11. Wirbelschichtreaktor (1) nach Anspruch 10, **dadurch gekennzeichnet, dass** die Wärmeübertrager (5) platten- oder rohrförmig ausgebildet sind.

12. Wirbelschichtreaktor (1) nach einem der Ansprüche 1 bis 11, **dadurch gekennzeichnet, dass** die Einbauten (3) aus Metall-, Keramik-, Polymer- oder Glaswerkstoffen gebildet sind.

## Claims

1. A fluidized-bed reactor (1) for carrying out a gasphase reaction, in which a gaseous reaction mixture flows from the bottom upward through a heterogeneous particulate catalyst forming a fluidized bed and internals (3) are arranged in the fluidized bed, wherein the internals (3) divide the fluidized bed into a plurality of cells (4) arranged horizontally in the fluidized-bed reactor (1) and a plurality of cells (4) arranged vertically in the fluidized-bed reactor (1), with the cells having cell walls which are permeable to gas and have openings which ensure an exchange number of the heterogeneous particulate catalyst in the vertical direction in the range from 1 to 100 liters/hour per liter of reactor volume.

2. The fluidized-bed reactor (1) according to claim 1, wherein the openings in the cell walls of the cells (4) arranged in the fluidized-bed reactor (1) ensure an exchange number of the heterogeneous particulate catalyst in the horizontal direction in the region of 100 liters/hour per liter of reactor volume.

3. The fluidized-bed reactor (1) according to claim 1 or 2, wherein the openings in the cell walls of the cells (4) arranged in the fluidized-bed reactor (1) ensure an exchange number of the heterogeneous particulate catalyst in the vertical direction in the range from 10 to 50 liters/hour per liter of reactor volume and in the horizontal direction of zero or from 10 to 50 liters/hour per liter of reactor volume.

4. The fluidized-bed reactor (1) according to any of claims 1 to 3, wherein the internals (3) are configured as cross-channel packing having creased gas-permeable metal sheets (10), expanded metal sheets or woven meshes which are arranged in parallel to one another in the vertical direction in the fluidized-bed reactor (1) and have creases (11) which form flat areas (12) between the creases having an angle of inclination to the vertical which is different from zero, with the flat areas (12) between the creases of successive metal sheets (10), expanded metal sheets or woven meshes having the same angle of inclination but with the opposite sign so as to form cells which are delimited in the vertical direction by constrictions (13) between the creases (11).

5. The fluidized-bed reactor (1) according to claim 4, wherein the angle of inclination to the vertical of the flat areas (12) between the creases is in the range from 10 to 80°, preferably from 20 to 70°, particularly preferably from 30 to 60°.

6. The fluidized-bed reactor (1) according to any of claims 1 to 3, wherein the internals (3) are formed by a bed of hollow spheres.

7. The fluidized-bed reactor (1) according to any of claims 1 to 6, wherein the cells (4) of the internals (3) have a hydraulic diameter measured by means of the radioactive tracer technique of from 100 to 5 mm, preferably from 50 to 5 mm.

8. The fluidized-bed reactor (1) according to any of claims 1 to 5 or 7, wherein the cells (4) of the internals (3) have a mean height measured in the vertical direction in the fluidized-bed reactor (1) by means of the radioactive tracer technique of from 100 to 3 mm, preferably from 40 to 5 mm.

9. The fluidized-bed reactor (1) according to any of claims 1 to 5, 7 or 8, wherein the flat areas (12) between the creases in the metal sheets (10), expanded metal sheets or woven meshes have a crease height in the range from 100 to 3 mm, particularly preferably from 40 to 5 mm, and the spacing of the constrictions (13) between the creases (11) is in the range from 50 to 2 mm, particularly preferably from 20 to 3 mm.

10. The fluidized-bed reactor (1) according to any of claims 1 to 9, wherein heat exchangers (5) are installed in the internals (3).

11. The fluidized-bed reactor (1) according to claim 10, wherein the heat exchangers (5) are configured in the form of plates or tubes.

12. The fluidized-bed reactor (1) according to any of claims 1 to 11, wherein the internals (3) are made of metal, ceramic, polymer or glass materials.

## Revendications

1. Réacteur à lit fluidisé (1) pour l'exécution d'une réaction en phase gazeuse, dans lequel un mélange réactionnel gazeux traverse de bas en haut un catalyseur particulaire hétérogène constituant un lit fluidisé et dans lequel des inserts (3) sont disposés dans le lit fluidisé, **caractérisé en ce que** les inserts (3) divisent le lit fluidisé en une pluralité de cellules (4) disposées horizontalement ainsi qu'en une pluralité de cellules (4) disposées verticalement dans le réacteur à lit fluidisé (1), comportant des parois de cellules qui sont perméables aux gaz et qui présentent des ouvertures qui assurent un indice d'échange du catalyseur particulaire hétérogène dans le sens vertical dans la plage de 1 à 100 litres/heure par litre de volume du réacteur.

2. Réacteur à lit fluidisé (1) selon la revendication 1, **caractérisé en ce que** les ouvertures dans les parois de cellules des cellules (4) disposées dans le réacteur à lit fluidisé assurent un indice d'échange du catalyseur particulaire hétérogène dans le sens horizontal de l'ordre de 100 litres/heure par litre de volume du réacteur.

3. Réacteur à lit fluidisé (1) selon la revendication 1 ou 2, **caractérisé en ce que** les ouvertures dans les parois de cellules des cellules (4) disposées dans le réacteur à lit fluidisé (1) assurent un indice d'échange du catalyseur particulaire hétérogène dans le sens vertical dans la plage de 10 à 50 litres/heure par litre de volume du réacteur et dans le sens horizontal de 0 ou dans la plage de 10 à 50 litres/heure par litre de volume du réacteur.

4. Réacteur à lit fluidisé (1) selon l'une quelconque des revendications 1 à 3, **caractérisé en ce que** les inserts (3) sont conçus sous forme de garnissage en canaux croisés, avec des tôles métalliques (10), des couches de toile ou de métal étiré, coudées, disposées parallèlement les uns aux autres dans le sens vertical dans le lit fluidisé (1), perméables aux gaz, à bords coudés (11), qui forment des faces coudées (12) avec un angle d'inclinaison différent de zéro par rapport à la verticale, et les faces coudées (12) des tôles métalliques (10), des couches de toile ou de métal étiré successives présentant le même angle d'inclinaison, mais à signe contraire et formant ainsi des cellules qui sont limitées dans le sens vertical par des zones étroites (13) entre les bord coudés (11).

5. Réacteur à lit fluidisé (1) selon la revendication 4, **caractérisé en ce que** les angles d'inclinaison des faces coudées (12) valent par rapport à la verticale dans la plage de 10 à 80°, de préférence entre 20 et 70°, de façon particulièrement préférée entre 30 et 60°.

6. Réacteur à lit fluidisé (1) selon l'une quelconque des revendications 1 à 3, **caractérisé en ce que** les inserts (3) sont constitués d'un lit de sphères creuses.

7. Réacteur à lit fluidisé (1) selon l'une quelconque des revendications 1 à 6, **caractérisé en ce que** les cellules (4) des inserts (3) présentent un diamètre hydraulique, mesuré par la technique de traceur radioactif, compris entre 100 et 5 mm, de préférence entre 50 et 5 mm.

8. Réacteur à lit fluidisé (1) selon l'une quelconque des revendications 1 à 5 ou 7, **caractérisé en ce que** les cellules (4) des inserts (3) présentent une hauteur moyenne, mesurée dans le sens vertical dans le réacteur à lit fluidisé (1) par la technique de traceur radioactif, comprise entre 100 et 3 mm, de préférence entre 40 et 5 mm.

9. Réacteur à lit fluidisé (1) selon l'une quelconque des revendications 1 à 5, 7 ou 8, **caractérisé en ce que** les faces coudées (12) dans les tôles métalliques (10), couches de toile ou de métal étiré, présentent une hauteur de coude dans la plage comprise entre 100 et 3 mm, de façon particulièrement préférée entre 40 et 5 mm, et l'écart des zones étroites (13) entre les bords coudés (11) a des valeurs dans la plage comprise entre 50 et 2 mm, de façon particulièrement préférée entre 20 et 3 mm.

10. Réacteur à lit fluidisé (1) selon l'une quelconque des revendications 1 à 9, **caractérisé en ce que** des éléments de transfert de chaleur (5) sont introduits dans les inserts (3).

11. Réacteur à lit fluidisé (1) selon la revendication 10, **caractérisé en ce que** les éléments de transfert de chaleur (5) sont conçus en forme de plaques ou de tubes.

12. Réacteur à lit fluidisé (1) selon l'une quelconque des revendications 1 à 11, **caractérisé en ce que** les inserts (3) sont constitués de matériaux métalliques, céramiques, polymères ou vitreux.
